# EUROPÄISCHE PATENTSCHRIFT

(11) **EP 1 439 122 B1**
(45) Veröffentlichungstag und Bekanntmachung des Hinweises auf die Patenterteilung: **04.01.2006**
(21) Anmeldenummer: 03027919.4
(22) Anmeldetag: 04.12.2003
(51) Int. Cl.: B64D 11/02, F16L 27/11

(54) **Faltenbalg zur mechanischen Verbindung von zwei, in einem vorgegebenen Abstand zueinander angeordneten Rohren**
Bellows for mechanically connecting two pipes arranged at a certain distance to each other
Soufflet pour relier mécaniquement deux tubes écartés d'une distance prédéterminée

(30) Priorität: 16.01.2003 DE 10301374
(43) Veröffentlichungstag der Anmeldung: 21.07.2004
(73) Patentinhaber: Airbus Deutschland GmbH, 21129 Hamburg (DE)
(72) Erfinder: Lutzer, Wilhelm, 23619 Zarpen (DE)
(74) Vertreter: Hansmann, Dierk

(56) Entgegenhaltungen:
- EP-A- 1 033 482
- FR-A- 1 444 034
- US-A- 5 480 194

## Beschreibung

Die Erfindung betrifft einen Faltenbalg zur mechanischen Verbindung von zwei, in einem vorgegebenen Abstand zueinander angeordneten Rohren, die zur Weiterleitung von fließfähigen Medien vorgesehen sind, vorzugsweise von einem, in einem Flugzeug angeordneten Zuleitungsrohr und einem Ableitungsrohr für einen Drainmast, wobei die beiden rohrförmigen Enden des Faltenbalges jeweils ein Ende eines Rohres umschließen, wie in Dokument EP 1 033 482 offenbart ist.

Bei der Verwendung von einem Faltenbalg zwischen einem flugzeugseitig angeordneten Zuleitungsrohr und einem Ableitungsrohr drainmastseitig kommt es auf Grund von Einbautoleranzen zu Verspannungen, die zu Schäden am Faltenbalg führen. Ursache dieser Schäden ist die große Steifigkeit der bisherigen Faltenbälge im Bereich des Versatzes zwischen den Rohren.

Der Erfindung liegt daher die Aufgabe zugrunde, einen Faltenbalg der eingangs genannten Art zu schaffen, mit dem eine mechanisch feste Verbindung von zwei Rohren ermöglicht wird, ohne daß zu mechanischen Schäden führende Verspannungen auftreten können.

Die Aufgabe wird erfindungsgemäß dadurch gelöst, daß eine flexibel ausgebildete Versatzstrecke vorgesehen ist, deren Enden über jeweils ein Gelenk mit den rohrförmigen Enden des Faltenbalges mechanisch fest verbunden sind.

Erfindungsgemäße Ausgestaltungen bestehen darin,
- daß das zulaufseitige Gelenk im Inneren des Zuleitungsrohres angeordnet ist,
- daß das dem Ableitungsrohr benachbarte Gelenk durch eine ringförmige Lippendichtung geschützt ist,
- daß der Übergang von der flexiblen Versatzstrecke zum rohrförmigen, dem Ableitungsrohr benachbarten Ende des Faltenbalges nach dem Prinzip von sich überlappenden Dachschindeln ausgebildet ist, und
- daß das dem Ableitungsrohr benachbarten Ende des Faltenbalges eine zusätzliche Knautschzone aufweist.

Ein wesentlicher Vorteil der Erfindung besteht darin, daß auch versetzt angeordnete Rohre, d.h. nicht fluchtende Rohre einwandfrei mechanisch fest verbunden werden können.

In der Zeichnung ist ein Ausführungsbeispiel nach der Erfindung dargestellt, und zwar zeigt:
- Fig. 1: einen Faltenbalg, der ein Zuleitungsrohr mit einem Ableitungsrohr mechanisch fest verbindet, und
- Fig. 2: einen Faltenbalg gemäß Fig. 1 mit einem Übergang nach dem Prinzip von sich überlappenden Dachschindeln.

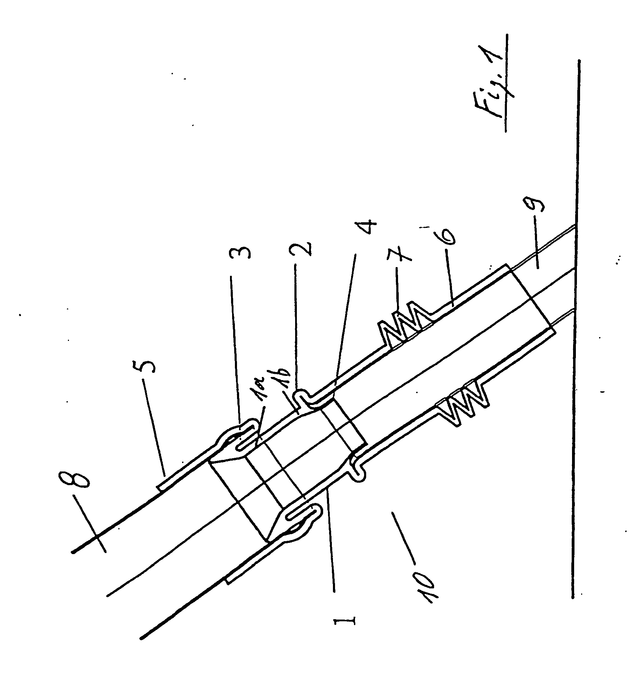

In Fig. 1 weist der mit 10 bezeichnete Faltenbalg eine flexibel ausgebildete Versatzstrecke 1 mit zugehörigen Enden 1a und 1b auf. Das Ende 1a ist über ein Gelenk 3 mit dem Ende 5 des Faltenbalges 10 mechanisch verbunden, wobei dieses Ende 5 den Außendurchmesser eines Zuleitungsrohres 8 fest umschließt. Hierbei kann das zulaufseitige Gelenk 3 im Innenraum des Zuleitungsrohres angeordnet sein. Das andere Ende 1b der Versatzstrecke 1 ist in gleicher Weise über ein Gelenk 2 mit dem anderen Ende 6 des Faltenbalges 10 mechanisch verbunden, wobei dieses Ende 6 eine zusätzliche Knautschzone 7 aufweist und den Außendurchmesser eines Ableitungsrohres 9 fest umschließt. Das Gelenk 2 ist vorzugsweise durch eine ringförmige Lippendichtung 4 geschützt.

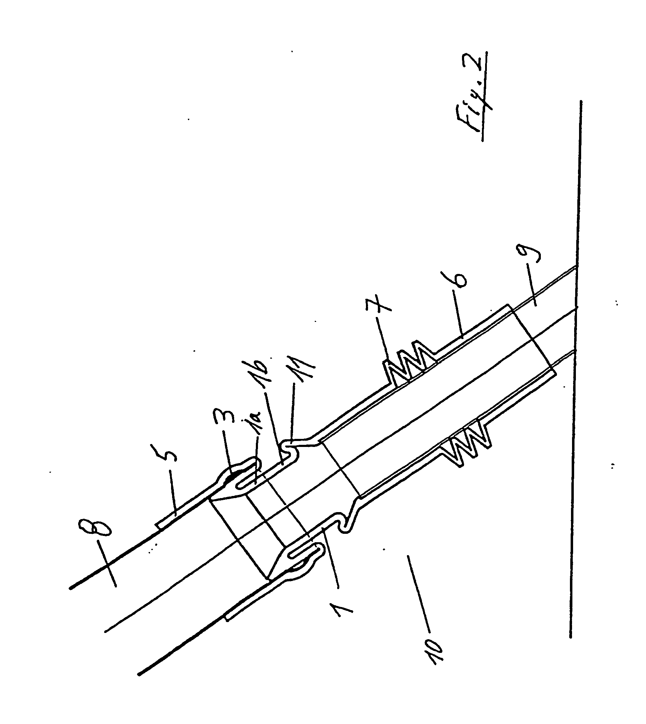

Wie aus Fig. 2 zu ersehen ist, kann der Faltenbalg 10, für dessen baugleiche Teile zu dem in Fig. 1 dargestellten Faltenbalg dieselben Bezugszeichen verwendet werden, einen Übergang 11 von der flexiblen Versatzstrecke 1 zum rohrförmigen, dem Ableitungsrohr 9 benachbarten Ende 6 des Faltenbalges 10 aufweisen, welcher nach dem Prinzip von sich über lappenden Dachschindeln ausgebildet ist.

### Bezugszeichenliste

- 1: Versatzstrecke des Faltenbalges 10
- 1a: ein Ende der Versatzstrecke 1
- 1b: anderes Ende der Versatzstrecke 1
- 2: ablaufseitiges Gelenk
- 3: zulaufseitiges Gelenk
- 4: Lippendichtung
- 5: zulaufseitiges Ende des Faltenbalges 10
- 6: ablaufseitiges Ende des Faltenbalges 10
- 7: Knautschzone des ablaufseitigen Endes 6
- 8: Zuleitungsrohr
- 9: Ableitungsrohr
- 10: Faltenbalg
- 11: Übergang gemäß überlappender Dachschindeln

## Patentansprüche

1. Faltenbalg zur mechanischen Verbindung von zwei, in einem vorgegebenen Abstand zueinander angeordneten Rohren, die zur Weiterleitung von fließfähigen Medien vorgesehen sind, vorzugsweise von einem, in einem Flugzeug angeordneten Zuleitungsrohr und einem Ableitungsrohr für einen Drainmast, wobei die beiden rohrförmigen Enden des Faltenbalges jeweils ein Ende eines Rohres umschließen, **dadurch gekennzeichnet, daß** eine flexibel ausgebildete Versatzstrecke (1) vorgesehen ist, deren Enden (1a, 1b) über jeweils ein Gelenk (3 bzw.2) mit den rohrförmigen Enden (5 bzw. 6) des Faltenbalges (10) mechanisch fest verbunden sind.

2. Faltenbalg nach Anspruch 1, **dadurch gekennzeichnet, daß** das zulaufseitige Gelenk (3) im Inneren des Zuleitungsrohres (8) angeordnet ist.

3. Faltenbalg nach Anspruch 1, **dadurch gekennzeichnet, daß** das dem Ableitungsrohr (9) benachbarte Gelenk (2) durch eine ringförmige Lippendichtung (4) geschützt ist.

4. Faltenbalg nach Anspruch 1, **dadurch gekennzeichnet, daß** der übergang von der flexiblen Versatzstrecke (1) zum rohrförmigen, dem Ableitungsrohr (9) benachbarten Ende (6) des Faltenbalges (10) nach dem Prinzip von sich überlappenden Dachschindeln (11) ausgebildet ist.

5. Faltenbalg nach Anspruch 4, **dadurch gekennzeichnet, daß** das dem Ableitungsrohr (9) benachbarte Ende (6) des Faltenbalges (10) eine zusätzliche Knautschzone (7) aufweist.

## Claims

1. Expansion bellows for the mechanical connection of two pipes arranged at a predetermined distance from one another, which are provided for conducting free-flowing media onwards, preferably of a feed pipe arranged in an aircraft and a drain pipe for a drainmast, the two tubular ends of the expansion bellows each enclosing one end of a pipe, **characterized in that** a flexibly formed offset section (1) is provided, the ends (la, 1b) of which are connected mechanically fixedly via respectively a joint (3 and 2 respectively) to the tubular ends (5 and 6) of the expansion bellows (10).

2. Expansion bellows according to claim 1, **characterized in that** the joint (3) on the inlet side is arranged in the interior of the feed pipe (8).

3. Expansion bellows according to claim 1, **characterized in that** the joint (2) adjacent to the drain pipe (9) is protected by an annular lip seal (4).

4. Expansion bellows according to claim 1, **characterized in that** the transition from the flexible offset section (1) to the tubular end (6) of the expansion bellows (10) adjacent to the drain pipe (9) is formed according to the principle of overlapping shingles (11).

5. Expansion bellows according to claim 4, **characterized in that** the end (6) of the expansion bellows (10) adjacent to the drain pipe (9) has an additional crumple zone (7).

## Revendications

1. Soufflet pour relier mécaniquement deux tubes, disposés à une distance prédéterminée l'un de l'autre, qui sont prévus pour acheminer des substances fluides, de préférence un tube d'arrivée, disposé dans un avion, et un tube d'évacuation pour un mât de drainage, les deux extrémités tubulaires du soufflet entourant chacune une extrémité d'un tube, **caractérisé en ce qu'**il est prévu un tronçon à déport (1) souple dont les extrémités (1a, 1b) sont reliées mécaniquement de façon solide, respectivement par l'intermédiaire d'une articulation (3 et 2), aux extrémités tubulaires (5 et 6) du soufflet (10).

2. Soufflet selon la revendication 1, **caractérisé en ce que** l'articulation (3) côté arrivée est disposée à l'intérieur du tube d'arrivée (8).

3. Soufflet selon la revendication 1, **caractérisé en ce que** l'articulation (2) contiguë au tube d'évacuation (9) est protégée par un joint à lèvres (4) annulaire.

4. Soufflet selon la revendication 1, **caractérisé en ce que** la zone de transition entre le tronçon à déport (1) souple et l'extrémité tubulaire (6) du soufflet (10), contiguë au tube d'évacuation (9), est réalisée selon le principe de bardeaux (11) qui se chevauchent.

5. Soufflet selon la revendication 4, **caractérisé en ce que** l'extrémité (6) du soufflet (10) adjacente au tube d'évacuation (9) présente une zone déformable (7) supplémentaire.
